# EUROPÄISCHE PATENTSCHRIFT

(11) **EP 3 311 670 B1**
(45) Veröffentlichungstag und Bekanntmachung des Hinweises auf die Patenterteilung: **06.05.2020**
(21) Anmeldenummer: 17195538.8
(22) Anmeldetag: 09.10.2017
(51) Int. Cl.: A21C 5/00, A21C 11/10

(54) **VORRICHTUNG ZUM GRAVIMETRISCHEN DOSIEREN UND PORTIONIEREN EINZELNER TEIGPORTIONEN AUS EINER TEIGMASSE**
DEVICE FOR GRAVIMETRIC DOSING AND PORTIONING OF INDIVIDUAL DOUGH PORTIONS FROM A DOUGH MASS
DISPOSITIF DE DOSAGE GRAVIMÉTRIQUE ET DE FRACTIONNEMENT D'UNE MASSE PÂTE EN PORTIONS DE PÂTE INDIVIDUELLES

(30) Priorität: 20.10.2016 DE 102016120042
(43) Veröffentlichungstag der Anmeldung: 25.04.2018
(73) Patentinhaber: Fritsch Bakery Technologies GmbH & Co. KG, 97348 Markt Einersheim (DE)
(72) Erfinder: Bernhardt, Udo, 97346 Iphofen (DE); Studtrucker, Ralf, 97317 Kitzingen (DE)
(74) Vertreter: Grünecker Patent- und Rechtsanwälte PartG mbB

(56) Entgegenhaltungen:
- EP-A1- 2 604 119
- EP-A1- 2 856 878
- EP-A2- 0 919 128
- WO-A1-01/05236
- AT-B- 363 410
- IT-A1- MI20 091 322
- JP-A- H02 142 436

## Beschreibung

Die Erfindung betrifft eine Vorrichtung zum, insbesondere kontinuierlichen, gravimetrischen Dosieren und Portionieren einzelner Teigportionen aus einer Teigmasse, welche eine Teigaufnahmeeinrichtung, welche zur Aufnahme einer in einzelne Teigportionen zu portionierenden Teigmasse eingerichtet ist, wobei die Teigaufnahmeeinrichtung eine Teigaufnahmekammer mit einem durch mehrere Wandungselemente definierten Teigaufnahmevolumen aufweist, sowie eine Portioniereinrichtung, welche zur, insbesondere kontinuierlichen, Portionierung einzelner Teigportionen aus einer in der Teigaufnahmekammer aufgenommenen Teigmasse eingerichtet ist, umfasst.

Entsprechende Vorrichtungen sind dem Grunde nach, z. B. aus der älteren europäischen Patentanmeldung EP 0 466 519 A1, bekannt. Eine andere entsprechende Vorrichtung ist aus AT 363410 B bekannt. Entsprechende Vorrichtungen werden insbesondere zur Dosierung und Portionierung von vergleichsweise weichen bzw. angegarten Teigmassen, d. h. Teigmassen mit einem vergleichsweise hohen Wassergehalt, eingesetzt.

Zur Dosierung und Portionierung ist in bekannten Vorrichtungen, d. h. z. B. in der Vorrichtung gemäß der vorgenannten europäischen Patentanmeldung, eine Wägeeinrichtung implementiert, über welche das Gewicht der aus einer Teigmasse einzeln portionierten Teigportionen erfasst wird. Das jeweils erfasste Gewicht der Teigportionen wird mit einem Referenzgewicht verglichen. Abweichungen des Gewichts der einzelnen Teigportionen von dem Referenzgewicht resultieren typischerweise aus unterschiedlichen Füllständen der Teigmasse in der Teigaufnahmekammer.

Das mit den bekannten Vorrichtungen erzielbare Dosier- bzw. Portionierergebnis ist grundsätzlich weiterentwicklungs- bzw. verbesserungsbedürftig.

Der Erfindung liegt die Aufgabe zugrunde, eine verbesserte Vorrichtung zum, insbesondere kontinuierlichen, gravimetrischen Dosieren und Portionieren einzelner Teigportionen aus einer Teigmasse anzugeben.

Die Aufgabe wird durch eine Vorrichtung gemäß Anspruch 1 gelöst. Die hierzu abhängigen Ansprüche betreffen besondere Ausführungsformen der Vorrichtung.

Die hierin beschriebene Vorrichtung dient zum, insbesondere kontinuierlichen, gravimetrischen Dosieren und Portionieren einzelner Teigportionen aus einer Teigmasse. Vermittels der Vorrichtung erfolgende Dosier- bzw. Portioniervorgänge erfolgen gravimetrisch, d. h. schwerkraftinduziert und somit unter (wesentlichem) Einfluss der Schwerkraft.

Die Vorrichtung dient insbesondere zum gravimetrischen Dosieren und Portionieren einzelner Teigportionen aus vergleichsweise weichen bzw. angegarten Teigmassen, d. h. Teigmassen mit einem vergleichsweise hohen Wasseranteil, wie sie etwa zur Herstellung mediterraner Brotsorten, d. h. z. B. Ciabatta, verwendet werden.

Die Vorrichtung umfasst als wesentliche Bestandteile eine Teigaufnahmeeinrichtung und eine Portioniereinrichtung.

Die Teigaufnahmeeinrichtung ist zur, insbesondere chargenweisen, Aufnahme einer in einzelne Teigportionen zu portionierenden Teigmasse eingerichtet. Über die Teigaufnahmeeinrichtung kann eine gravimetrische Dosierung der in einzelne Teigportionen zu portionierenden Teigmasse in die Portioniereinrichtung erfolgen. Die Teigaufnahmeeinrichtung kann insofern auch als Dosiereinrichtung, welche zur Dosierung der in einzelne Teigportionen zu portionierenden Teigmasse in die Portioniereinrichtung eingerichtet ist, bezeichnet bzw. erachtet werden.

Die Teigaufnahmeeinrichtung weist eine Teigaufnahmekammer mit einem durch mehrere, z. B. plattenartige bzw. -förmige, Wandungselemente, kurz Wandungen, begrenzten bzw. definierten Teigaufnahmevolumen auf. Bei entsprechenden Wandungselementen kann es sich z. B. um das Teigaufnahmevolumen zumindest abschnittsweise seitlich begrenzende Seitenwandungen oder um das Teigaufnahmevolumen zumindest abschnittsweise bodenseitig begrenzende Bodenwandungen handeln.

Die Teigaufnahmekammer weist typischerweise einen Zuführbereich bzw. eine Zuführöffnung, über welche(n) (chargenweise) Teigmasse in das Teigaufnahmevolumen zuführbar ist, und einen Abführbereich bzw. eine Abführöffnung, über welche(n) Teigmasse aus dem Teigaufnahmevolumen abführbar ist, auf. Die Portioniereinrichtung ist typischerweise im Bereich des Abführbereichs der Teigaufnahmekammer angeordnet oder ausgebildet.

Das Zuführen der Teigmasse in die Teigaufnahmekammer kann über eine zumindest abschnittsweise im Bereich des Zuführbereichs angeordnete oder ausgebildete Zuführeinrichtung, welche zur Zuführung von Teigmasse in die Teigaufnahmekammer eingerichtet ist, erfolgen. Die Zuführeinrichtung kann z. B. einen Zuführbehälter, insbesondere einen Knetkessel, umfassen. Denkbar ist es auch, dass die Zuführeinrichtung ein bandartiges Förderelement umfasst; bei dem bandartigen Förderelement handelt es sich typischerweise um ein Zuführförderband.

Die Zuführeinrichtung wird typischerweise (nur) während der Füllung der Teigaufnahmekammer mit Teigmasse in Betrieb genommen, beispielsweise können entsprechende Förderelemente also (nur) während der Füllung der Teigaufnahmekammer mit Teigmasse in Betrieb genommen werden, insbesondere um eine gleichmäßige Füllung der Teigaufnahmekammer zu unterstützen. Dies gilt insbesondere für den Fall schräg stehender Wandungselemente, da die Teigmasse hier unter Umständen nicht von selbst in die Teigaufnahmekammer rutscht; die Füllung der Teigaufnahmekammer kann hier durch die Inbetriebnahme der Zuführeinrichtung unterstützt werden. Auch würde die auf schräg stehenden Wandungselementen befindliche Teigmasse immer wieder von frisch zugeführten Teigchargen überdeckt, sodass innerhalb der Teigaufnahmekammer unterschiedliche Teigreifegrade vorlägen, was durch die Inbetriebnahme der Zuführeinrichtung ebenso vermieden wird. Grundsätzlich ist eine gleichmäßige Füllung der Teigaufnahmekammer jedoch durch ein gewisses Fließvermögen der, wie erwähnt, typischerweise vergleichsweise weichen bzw. angegarten Teigmasse begünstigt, welches durch die Inbetriebnahme der Zuführeinrichtung (weiter) begünstigt werden kann.

Die Portioniereinrichtung ist zur, insbesondere kontinuierlichen chargenweisen, Portionierung einzelner Teigportionen aus einer in der Teigaufnahmekammer aufgenommenen Teigmasse eingerichtet. Die Portioniereinrichtung weist typischerweise einen Austragbereich, über welchen einzelne Teigportionen aus der Portioniereinrichtung austragbar sind, auf. Das Austragen der einzelnen Teigportionen aus der Portioniereinrichtung bzw. das Weitertransportieren der einzelnen Teigportionen kann über eine Austrageinrichtung, welche zur, insbesondere kontinuierlichen, Austragung einzelner Teigportionen aus der Portioniereinrichtung eingerichtet ist, erfolgen. Die Austrageinrichtung kann hierzu z. B. ein bandartiges Förderelement umfassen; bei dem bandartigen Förderelement handelt es sich typischerweise um ein Austrage- oder Ablageförderband. Das Austrage- oder Ablageförderband kann so angesteuert sein, dass die Teigportionen (mauer)ziegelartig übereinanderliegen, sodass sich ein kontinuierliches gleichmäßiges Teigband ergibt.

Wesentlich an der hierin beschriebenen Vorrichtung ist, dass wenigstens ein Wandungselement der Teigaufnahmekammer, insbesondere relativ zu wenigstens einem weiteren Wandungselement der Teigaufnahmekammer, in wenigstens einem Bewegungsfreiheitsgrad bewegbar gelagert ist. Mithin ist das Teigaufnahmevolumen durch Bewegungen des wenigstens einen in wenigstens einem Bewegungsfreiheitsgrad bewegbar gelagerten Wandungselements, insbesondere relativ zu wenigstens einem weiteren Wandungselement, gezielt variierbar bzw. steuerbar. Über Variationen des Teigaufnahmevolumens lässt sich das Füllstandsniveau, kurz der Füllstand, der in der Teigaufnahmekammer aufgenommenen Teigmasse steuern. Mithin ist auch das Füllstandsniveau der in der Teigaufnahmekammer aufgenommenen Teigmasse durch Bewegungen des wenigstens einen in wenigstens einem Bewegungsfreiheitsgrad bewegbar gelagerten Wandungselements, insbesondere relativ zu wenigstens einem weiteren Wandungselement, gezielt variierbar bzw. steuerbar.

Wie sich im Weiteren ergibt, ist insbesondere ein konstantes Füllstandsniveau angestrebt. Das Füllstandsniveau der in der Teigaufnahmekammer aufgenommenen Teigmasse ist essentiell für die gravimetrische Dosierung bzw. Portionierung der Teigmasse, da dieses wesentlichen Einfluss auf die in die Portioniereinrichtung dosierte Teigmenge der Teigmasse hat. Daneben hat das Füllstandsniveau Einfluss auf die Eigenschaften bzw. das Verhalten der in der Teigaufnahmekammer aufgenommenen Teigmasse. Beispielsweise beeinflusst das Füllstandsniveau den auf die in der Teigaufnahmekammer aufgenommenen Teigmasse wirkenden Druck sowie damit zusammenhängende Teigparameter, wie z. B. den Gasgehalt der Teigmasse.

Insgesamt liegt damit eine verbesserte Vorrichtung zum, insbesondere kontinuierlichen, gravimetrischen Dosieren und Portionieren einzelner Teigportionen aus einer Teigmasse vor, mit welcher sich aufgrund der Steuerungs- bzw. Variationsmöglichkeit des Teigaufnahmevolumens der Teigaufnahmekammer ein genaues Dosier- bzw. Portionierergebnis erzielen lässt.

Die Vorrichtung zeichnet sich gegenüber dem eingangs genannten Stand der Technik auch dadurch aus, dass die Implementierung einer Wägeeinrichtung aufgrund der vergleichsweise aufwändigen Steuerung bzw. Regelung des Betriebs der Portioniereinrichtung nicht erforderlich ist.

Ganz allgemein gilt, dass die Vorrichtung zur Bewegung des wenigstens einen in wenigstens einem Bewegungsfreiheitsgrad bewegbar gelagerten Wandungselements typischerweise eine mit dem jeweiligen Wandungselement (unmittelbar oder mittelbar, d. h. unter Zwischenschaltung wenigstens eines Bauteils bzw. einer Bauteilgruppe) gekoppelte Antriebseinrichtung umfasst. Die Antriebseinrichtung umfasst wenigstens eine, insbesondere (elektro)motorische Antriebseinheit, welche zur Erzeugung einer das jeweilige Wandungselement in eine Bewegung versetzenden Antriebskraft eingerichtet ist.

Ganz allgemein gilt ferner, dass es sich bei einem jeweiligen in wenigstens einem Bewegungsfreiheitsgrad bewegbar gelagerten Wandungselement um ein bandartiges Förderelement, mithin z. B. um ein Förderband, handeln kann. Ein in wenigstens einem Bewegungsfreiheitsgrad bewegbar gelagertes Wandungselement kann sonach als bandartiges Förderelement ausgebildet sein oder wenigstens ein solches umfassen. Die Förderelemente dienen insbesondere dazu, die in der Teigaufnahmekammer aufgenommene Teigmasse in Richtung der Portioniereinrichtung zu fördern. Durch Variation der Fördergeschwindigkeit und/oder Förderrichtung der Förderelemente kann eine gezielte Beeinflussung der Eigenschaften bzw. des Verhaltens der in der Teigaufnahmekammer aufgenommenen Teigmasse realisiert werden.

Die erfindungsgemäße Vorrichtung umfasst eine hard- und/oder softwaremäßig implementierte Steuereinrichtung, welche zur, insbesondere kontinuierlichen, Steuerung wenigstens der Bewegungen des wenigstens einen in wenigstens einem Bewegungsfreiheitsgrad bewegbar gelagerten Wandungselements in Abhängigkeit wenigstens einer vorgebbaren oder vorgegebenen Zielgröße eingerichtet ist. Die Steuereinrichtung ist datenmäßig mit den zur Realisierung von Bewegungen des jeweiligen Wandungselements in Betrieb zu nehmenden Funktionskomponenten, d. h. insbesondere einer entsprechenden Antriebseinrichtung, der Vorrichtung verbunden.

Bei der vorgebbaren oder vorgegebenen Zielgröße handelt es sich erfindungsgemäß um ein konstantes Füllstandsniveau der in der Teigaufnahmekammer aufgenommenen Teigmasse handeln. Mithin lässt sich auch bei veränderlicher Menge der in der Teigaufnahmekammer aufgenommenen Teigmasse ein konstantes Füllstandsniveau realisieren. Mit anderen Worten ist die Steuereinrichtung insbesondere eingerichtet, das Füllstandsniveau der in der Teigaufnahmekammer aufgenommenen Teigmasse durch gezielte Bewegungen des wenigstens einen in wenigstens einem Bewegungsfreiheitsgrad bewegbar gelagerten Wandungselements unabhängig der tatsächlich in der Teigaufnahmekammer befindlichen Teigmenge auf einem vorgebbaren oder vorgegebenen Wert konstant zu halten. Die Steuereinrichtung kann mit einer, z. B. optischen, Überwachungseinrichtung, welche zur, z. B. optischen, Überwachung des Füllstandsniveaus der in der Teigaufnahmekammer aufgenommenen Teigmasse eingerichtet ist, gekoppelt sein. Eine optische Überwachungseinrichtung kann z. B. als optische Sensorik (Füllstandssensorik) ausgebildet sein oder wenigstens eine solche umfassen.

Selbstverständlich kann die Steuereinrichtung eingerichtet sein, Bewegungen des wenigstens einen in wenigstens einem Bewegungsfreiheitsgrad bewegbar gelagerten Wandungselements auf Grundlage weiterer Parameter der Vorrichtung bzw. einer die Vorrichtung beinhaltenden, übergeordneten Anlage zur Be- und/oder Verarbeitung von Teig, zu steuern. Die Steuereinrichtung kann z. B. zur, insbesondere kontinuierlichen, Steuerung der Bewegungen des wenigstens einen in wenigstens einem Bewegungsfreiheitsgrad bewegbar gelagerten Wandungselements in Abhängigkeit einer die Zuführung von Teigmasse in die Teigaufnahmekammer unmittelbar oder mittelbar beschreibenden Zuführinformation und/oder in Abhängigkeit einer den Austrag einzelner Teigportionen aus der Portioniereinrichtung unmittelbar oder mittelbar beschreibenden Austragsinformation eingerichtet sein. Die Zuführ- bzw. Austragsinformation kann z. B. auf Grundlage erfasster Betriebsparameter entsprechender Zuführ- bzw. Austrageinrichtungen erzeugt werden.

Das wenigstens eine bewegbar gelagerte Wandungselement kann in wenigstens einem translatorischen, insbesondere linearen, Bewegungsfreiheitsgrad translatorisch, insbesondere linear, bewegbar gelagert sein. Bei einer Bewegung eines Wandungselements kann es sich sonach um eine, insbesondere lineare, Translationsbewegung entlang einer, insbesondere linearen, z. B. horizontal ausgerichteten, Translationsachse handeln. Über eine derartige Bewegung ist das Teigaufnahmevolumen der Teigaufnahmekammer und das Füllstandsniveau der in der Teigaufnahmekammer aufgenommenen Teigmasse variierbar bzw. steuerbar. Alternativ oder ergänzend kann das wenigstens eine bewegbar gelagerte Wandungselement in wenigstens einem Schwenkbewegungsfreiheitsgrad schwenkbewegbar gelagert sein. Bei einer Bewegung eines Wandungselements kann es sich sonach um eine Schwenkbewegung um eine, z. B. horizontal ausgerichtete, Schwenkachse handeln. Über eine derartige Bewegung ist das Teigaufnahmevolumen der Teigaufnahmekammer und das Füllstandsniveau der in der Teigaufnahmekammer aufgenommenen Teigmasse variierbar bzw. steuerbar.

Selbstverständlich sind kombinierte Bewegungen eines Wandungselements in unterschiedlichen Bewegungsfreiheitsgraden denkbar. Ein Wandungselement kann also in einem ersten Bewegungsfreiheitsgrad z. B. entlang einer Translationsachse und in einem zweiten Bewegungsfreiheitsgrad z. B. um eine Schwenkachse bewegt werden. Kombinierte Bewegungen eines Wandungselements in unterschiedlichen Bewegungsfreiheitsgraden können grundsätzlich zeitgleich oder zeitlich versetzt erfolgen.

Selbstverständlich können auch mehrere, jeweils in wenigstens einem Bewegungsfreiheitsgrad bewegbar gelagerte Wandungselemente vorhanden sein. Entsprechende, in wenigstens einem Bewegungsfreiheitsgrad bewegbar gelagerte Wandungselemente können abhängig oder unabhängig voneinander respektive zeitgleich oder zeitlich versetzt zueinander bewegt werden. Entsprechende in wenigstens einem Bewegungsfreiheitsgrad bewegbar gelagerte Wandungselemente sind typischerweise einander gegenüber liegend angeordnet. Bei einer, insbesondere in einer Aufsicht, eine quaderartige bzw. - förmige Grundform aufweisenden Teigaufnahmekammer kann es sich bei entsprechenden Wandungselementen z. B. um zwei einander gegenüber liegend angeordnete Seitenwandungen der Teigaufnahmekammer handeln. Sofern sich durch die jeweiligen Bewegungsfreiheitsgrade Schwenkbewegungen der Wandungselement realisieren lassen, können die Schwenkachsen der jeweiligen Wandungselemente parallel angeordnet bzw. ausgerichtet sein.

Beispielsweise können gemäß einer konkreten Ausführungsform zwei einander gegenüber liegend angeordnete, jeweils in wenigstens einem Schwenkbewegungsfreiheitsgrad schwenkbewegbar gelagerte Wandungselemente vorhanden sein. Durch Schwenkbewegungen der Wandungselemente ist eine, insbesondere querschnittlich betrachtet, trichterartige bzw. -förmige Teigaufnahmekammer mit einem in Abhängigkeit der jeweiligen Schwenkstellung der Wandungselemente variierbaren Öffnungswinkel ausbildbar. Das Teigaufnahmevolumen und das Füllstandsniveau der in der Teigaufnahmekammer aufgenommenen Teigmasse lassen sich über Variationen des Öffnungswinkels gezielt variieren.

Die Portioniereinrichtung kann z. B. als Walzenportionierer ausgebildet sein oder wenigstens einen solchen umfassen. Der Walzenportionierer kann wenigstens ein als, insbesondere sternartig bzw. -förmig, ausgebildetes Walzenelement ausgebildetes oder ein solches umfassendes Portionierelement umfassen. Insbesondere umfasst ein entsprechender Walzenportionierer zwei einander gegenüber liegend bzw. parallel angeordnete Walzenelemente. Entsprechende Walzenelemente sind jeweils um eine Rotationsachse rotierbar (drehbar) gelagert. Die Rotationsachsen der jeweiligen Walzenelemente sind typischerweise parallel angeordnet bzw. ausgerichtet. Die Rotationsrichtung der jeweiligen Walzenelement ist typischerweise gegenläufig, d. h. ein erstes Walzenelement rotiert im Uhrzeigersinn, ein zweites Walzenelement rotiert gegen den Uhrzeigersinn.

Zwischen einem in wenigstens einem Bewegungsfreiheitsgrad bewegbar gelagerten Wandungselement und einem, insbesondere an dieses angrenzenden, nicht bewegbar gelagerten Wandungselement kann wenigstens ein Dichtelement, z. B. in Gestalt einer Dichtlippe oder dergleichen, angeordnet oder ausgebildet sein. Das Dichtelement ist zur Abdichtung der Teigaufnahmekammer bzw. des Teigaufnahmevolumens im Bereich zwischen dem in wenigstens einem Bewegungsfreiheitsgrad bewegbar gelagerten Wandungselement und dem, insbesondere an dieses angrenzenden, nicht bewegbar gelagerten Wandungselement eingerichtet. Ein entsprechendes Dichtelement kann an dem bewegbar gelagerten Wandungselement und/oder an dem nicht bewegbar gelagerten Wandungselement angeordnet oder ausgebildet sein. Ein entsprechendes Dichtelement kann (beschädigungs- bzw. zerstörungsfrei) lösbar an dem jeweiligen Wandungselement befestigt sein, was z. B. eine Reinigung der (entleerten) Teigaufnahmekammer vereinfacht.

Die Vorrichtung kann ferner wenigstens eine Trennmittelaufbringeinrichtung, welche zur zumindest abschnittsweisen Aufbringung wenigstens eines Trennmittels auf wenigstens ein Wandungselement, insbesondere auf wenigstens ein in wenigstens einem Bewegungsfreiheitsgrad bewegbar gelagertes Wandungselement, eingerichtet ist, umfassen. Eine entsprechende Trennmittelaufbringeinrichtung kann außerhalb der Teigaufnahmekammer angeordnet oder ausgebildet sein. Mithin kann sich ein mit Trennmittel zu beaufschlagendes Wandungselement zumindest abschnittsweise außerhalb des Teigaufnahmevolumens erstrecken. Bei dem Trennmittel kann es sich z. B. um Mehl, Öl oder Wachs handeln bzw. kann ein Trennmittel Mehl, Öl oder Wachs umfassen.

Die Erfindung wird im Weiteren anhand der in den Zeichnungen dargestellten Ausführungsbeispiele erläutert. Dabei zeigt:
- Fig. 1, 2: Prinzipdarstellungen einer Vorrichtung gemäß einem Ausführungsbeispiel;
- Fig. 3, 4: Prinzipdarstellungen einer Vorrichtung gemäß einem weiteren Ausführungsbeispiel; und
- Fig. 5, 6: Prinzipdarstellungen einer Vorrichtung gemäß einem weiteren Ausführungsbeispiel.

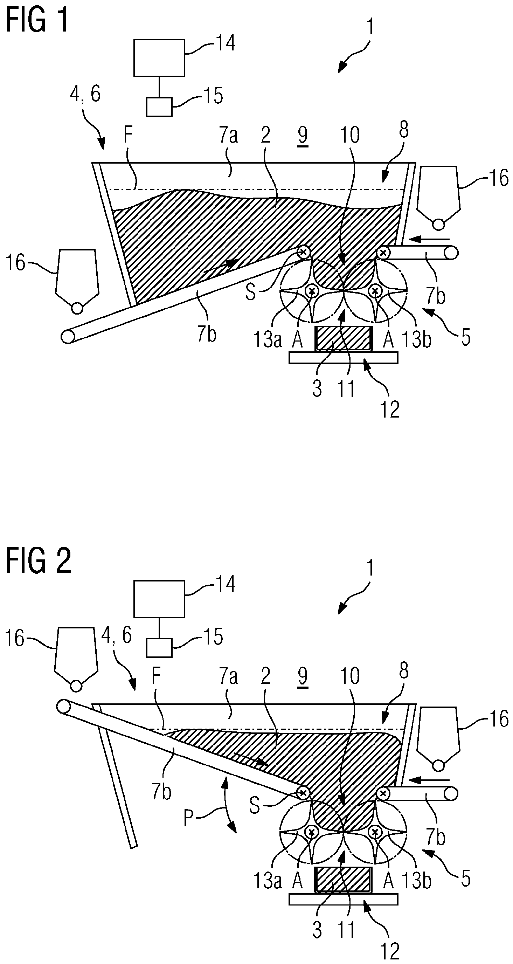

Die Fig. 1, 2 zeigen eine Prinzipdarstellung einer Vorrichtung 1 gemäß einem Ausführungsbeispiel der Erfindung in einer quergeschnittenen Ansicht.

Die Vorrichtung 1 dient zum, insbesondere kontinuierlichen, gravimetrischen Dosieren und Portionieren einzelner Teigportionen 3 aus einer Teigmasse 2. Vermittels der Vorrichtung 1 erfolgende Dosier- bzw. Portioniervorgänge erfolgen gravimetrisch, d. h. schwerkraftinduziert und somit unter (wesentlichem) Einfluss der Schwerkraft. Bei den vermittels der Vorrichtung 1 zu dosierenden bzw. zu portionierenden Teigmassen 2 handelt es sich typischerweise um vergleichsweise weiche bzw. angegarte Teigmassen 2, d. h. Teigmassen 2 mit einem vergleichsweise hohen Wasseranteil, wie sie etwa zur Herstellung mediterraner Brotsorten, d. h. z. B. Ciabatta, verwendet werden.

Die Vorrichtung 1 umfasst eine Teigaufnahmeeinrichtung 4 und eine Portioniereinrichtung 5.

Die Teigaufnahmeeinrichtung 4 ist zur, insbesondere chargenweisen, Aufnahme einer in einzelne Teigportionen 3 zu portionierenden Teigmasse 2 eingerichtet. Über die Teigaufnahmeeinrichtung 4 kann eine gravimetrische Dosierung der in einzelne Teigportionen 3 zu portionierenden Teigmasse 2 in die Portioniereinrichtung 5 erfolgen. Die Teigaufnahmeeinrichtung 4 kann insofern auch als Dosiereinrichtung, welche zur Dosierung der in einzelne Teigportionen 3 zu portionierenden Teigmasse 2 in die Portioniereinrichtung 5 eingerichtet ist, bezeichnet bzw. erachtet werden.

Die Teigaufnahmeeinrichtung 4 weist eine Teigaufnahmekammer 6 auf. In den in Fig. gezeigten Ausführungsbeispielen hat die Teigaufnahmekammer 6 beispielhaft eine (im Wesentlichen) quaderartige bzw. -förmige Gestalt. Die Teigaufnahmekammer 6 weist ein durch mehrere, insbesondere plattenartige bzw. -förmige, Wandungselemente 7a, 7b, kurz Wandungen, definiertes Teigaufnahmevolumen 8. Ersichtlich bilden die Wandungselemente 7a, 7b seitliche und bodenseitige Begrenzungen der Teigaufnahmekammer 6 bzw. des Teigaufnahmevolumens 8, weshalb es sich bei den Wandungselementen 7a, 7b um Seiten- bzw. Bodenwandungen der Teigaufnahmekammer 6 handelt.

Bei den Wandungselementen 7b handelt es sich jeweils um bandartige Förderelemente, d. h. um Förderbänder, deren jeweilige Förderrichtung durch die diesen zugeordneten Pfeile angedeutet ist. Die Förderelemente dienen insbesondere dazu, die in der Teigaufnahmekammer 6 aufgenommene Teigmasse 2 in Richtung der Portioniereinrichtung 5 zu fördern.

Die Teigaufnahmekammer 6 weist einen (oberen) Zuführbereich 9 bzw. eine Zuführöffnung, über welche(n) Teigmasse 2 chargenweise in die Teigaufnahmekammer 6 bzw. in das Teigaufnahmevolumen 8 zuführbar ist, und einen (unteren) Abführbereich 10 bzw. eine Abführöffnung, über welche(n) Teigmasse 2 aus der Teigaufnahmekammer 6 bzw. aus dem Teigaufnahmevolumen 8 abführbar ist, auf. Das Zuführen der Teigmasse 2 in die Teigaufnahmekammer 6 kann über eine zumindest abschnittsweise im Bereich des Zuführbereichs 9 angeordnete oder ausgebildete Zuführeinrichtung (nicht gezeigt), welche zur Zuführung von Teigmasse 2 in die Teigaufnahmekammer 6 eingerichtet ist, erfolgen. Die Zuführeinrichtung kann einen Knetkessel und/oder ein bandartiges Förderelement (Zuführförderband) umfassen.

Die Zuführeinrichtung wird typischerweise (nur) während der Füllung der Teigaufnahmekammer 6 mit Teigmasse 2 in Betrieb genommen, beispielsweise können entsprechende Förderelemente also (nur) während der Füllung der Teigaufnahmekammer 6 mit Teigmasse 2 in Betrieb genommen werden, um eine gleichmäßige Füllung der Teigaufnahmekammer 6 zu unterstützen. Dies gilt insbesondere für den Fall schräg stehender Wandungselemente 7a, 7b, da die Teigmasse 2 hier typischerweise nicht von selbst in die Teigaufnahmekammer 6 rutscht; die Füllung der Teigaufnahmekammer 6 kann hier durch die Inbetriebnahme der Zuführeinrichtung unterstützt werden. Auch würde die auf schräg stehenden Wandungselementen 7a, 7b befindliche Teigmasse 2 immer wieder von frisch zugeführten Teigchargen überdeckt, sodass innerhalb der Teigaufnahmekammer 6 unterschiedliche Teigreifegrade vorlägen, was durch die Inbetriebnahme der Zuführeinrichtung ebenso vermieden wird.

Die im Bereich des durch die einander gegenüber liegenden freien Enden der Wandungselemente 7b definierten Abführbereichs 10 der Teigaufnahmekammer 6 angeordnete bzw. ausgebildete Portioniereinrichtung 5 ist zur, insbesondere kontinuierlichen chargenweisen, Portionierung einzelner Teigportionen 3 aus der in der Teigaufnahmekammer 6 aufgenommenen Teigmasse 2 eingerichtet. Die Portioniereinrichtung 5 weist einen Austragbereich 11, über welchen einzelne Teigportionen 3 aus der Portioniereinrichtung 5 austragbar sind, auf. Das Austragen der einzelnen Teigportionen 3 aus der Portioniereinrichtung 5 bzw. das Weitertransportieren der einzelnen Teigportionen 3 erfolgt über eine Austrageinrichtung 12, welche zur, insbesondere kontinuierlichen, Austragung einzelner Teigportionen 3 aus der Portioniereinrichtung 5 eingerichtet ist. Die Austrageinrichtung 12 umfasst ein nicht näher bezeichnetes bandartiges Förderelement, d. h. ein Austrage- oder Ablageförderband. Das Austrage- oder Ablageförderband ist typischerweise so angesteuert, dass die Teigportionen 3 (mauer)ziegelartig übereinanderliegen, sodass sich ein kontinuierliches gleichmäßiges Teigband ergibt.

In den in den Fig. gezeigten Ausführungsbeispielen ist die Portioniereinrichtung 5 als Walzenportionierer ausgebildet. Der Walzenportionierer umfasst zwei als sternartig bzw. -förmig ausgebildete Walzenelemente ausgebildete Portionierelemente 13a, 13b in einander gegenüber liegender bzw. paralleler Anordnung. Die Portionierelemente 13a, 13b sind jeweils um eine Rotationsachse A rotierbar (drehbar) gelagert. Die Rotationsachsen A der Portionierelemente 13a, 13b sind parallel angeordnet bzw. ausgerichtet. Die Rotationsrichtung der Portionierelemente 13a, 13b ist gegenläufig, d. h. ein erstes Portionierelement 13a rotiert im Uhrzeigersinn, ein zweites Portionierelement 13b rotiert gegen den Uhrzeigersinn.

Wesentlich an der Vorrichtung 1 ist, dass ein Wandungselement 7b der Teigaufnahmekammer 6, d. h. in dem in den Fig. 1, 2 gezeigten Ausführungsbeispiel (nur) das linke Wandungselement 7b, relativ zu wenigstens einem weiteren Wandungselement 7a, 7b der Teigaufnahmekammer 6 bewegbar gelagert ist. Konkret ist das Wandungselement 7b in wenigstens einem Schwenkbewegungsfreiheitsgrad, vgl. Doppelpfeil P, schwenkbewegbar gelagert. Bei einer Bewegung des Wandungselements 7b handelt es sich sonach um eine Schwenkbewegung. Die Schwenkbewegungen des Wandungselements 7b erfolgen um die im Bereich des abführbereichsseitigen Endes des Wandungselements 7b angeordnete, horizontal ausgerichtete Schwenkachse S.

Wie sich aus einem Vergleich der Fig. 1, 2, in welchen das Wandungselement 7b in unterschiedlichen Schwenkstellungen dargestellt ist, ergibt, ist das Teigaufnahmevolumen 8 durch Bewegungen des Wandungselements 7b gezielt variierbar bzw. steuerbar. Über Variationen des Teigaufnahmevolumens 8 lässt sich das durch die gestrichelte Linie angedeutete Füllstandsniveau F, kurz der Füllstand, der in der Teigaufnahmekammer 6 aufgenommenen Teigmasse 2 steuern. Hierbei ist insbesondere ein konstantes Füllstandsniveau F angestrebt. Das Füllstandsniveau F der Teigmasse 2 ist essentiell für die gravimetrische Dosierung bzw. Portionierung der Teigmasse 2, da dieses wesentlichen Einfluss auf die in die Portioniereinrichtung 5 dosierte Teigmenge der Teigmasse 2 hat. Daneben hat das Füllstandsniveau F Einfluss auf die Eigenschaften bzw. das Verhalten der Teigmasse 2. Beispielsweise beeinflusst das Füllstandsniveau F den auf die Teigmasse 2 wirkenden Druck sowie damit zusammenhängende Teigparameter, wie z. B. den Gasgehalt der Teigmasse 2.

Zur Realisierung von Bewegungen des bewegbar gelagerten Wandungselements 7b umfasst die Vorrichtung 1 eine mit diesem (unmittelbar oder mittelbar, d. h. unter Zwischenschaltung wenigstens eines Bauteils bzw. einer Bauteilgruppe) gekoppelte Antriebseinrichtung (nicht gezeigt). Die Antriebseinrichtung umfasst eine, insbesondere (elektro)motorische Antriebseinheit (nicht gezeigt), welche zur Erzeugung einer das Wandungselement 7b in eine Bewegung versetzenden Antriebskraft eingerichtet ist.

Bewegungen des bewegbar gelagerten Wandungselements 7b werden über eine Steuereinrichtung 14 gesteuert. Die hard- und/oder softwaremäßig implementierte Steuereinrichtung 14 ist zur, insbesondere kontinuierlichen, Steuerung wenigstens der Bewegungen des bewegbar gelagerten Wandungselements 7b in Abhängigkeit wenigstens einer vorgebbaren oder vorgegebenen Zielgröße eingerichtet. Hierfür ist die Steuereinrichtung 14 datenmäßig mit den zur Realisierung von Bewegungen des Wandungselements 7b in Betrieb zu nehmenden Funktionskomponenten der Vorrichtung 1, d. h. insbesondere der Antriebseinrichtung, verbunden.

Bei der vorgebbaren oder vorgegebenen Zielgröße handelt es sich insbesondere um ein konstantes Füllstandsniveau F der in der Teigaufnahmekammer 6 aufgenommenen Teigmasse 2. Mithin lässt sich auch bei veränderlicher Menge der in der Teigaufnahmekammer 6 aufgenommenen Teigmasse 2 ein konstantes Füllstandsniveau F realisieren; ersichtlich ist die Menge der in der Teigaufnahmekammer 6 aufgenommenen Teigmasse 2 in den Fig. 1, 2 unterschiedlich, das Füllstandsniveau F der Teigmasse 2 jedoch (im Wesentlichen) gleich. Mit anderen Worten ist die Steuereinrichtung 14 eingerichtet, das Füllstandsniveau F der in der Teigaufnahmekammer 6 aufgenommenen Teigmasse 2 durch gezielte Bewegungen des bewegbar gelagerten Wandungselements 7b unabhängig der tatsächlich in der Teigaufnahmekammer 6 befindlichen Teigmenge auf einem vorgebbaren oder vorgegebenen Wert konstant zu halten. Zur Überwachung des Füllstandsniveaus F der in der Teigaufnahmekammer 6 aufgenommenen Teigmasse 2 ist die Steuereinrichtung 14 mit einer z. B. optischen, Überwachungseinrichtung 15, welche zur optischen Überwachung des Füllstandsniveaus F der in der Teigaufnahmekammer 6 aufgenommenen Teigmasse 2 eingerichtet ist, gekoppelt. Die optische Überwachungseinrichtung 15 kann z. B. als optische Sensorik (Füllstandssensorik) ausgebildet sein oder wenigstens eine solche umfassen.

Selbstverständlich kann die Steuereinrichtung 14 eingerichtet sein, Bewegungen des bewegbar gelagerten Wandungselements 7b auf Grundlage weiterer Parameter der Vorrichtung 1 bzw. einer die Vorrichtung 1 beinhaltenden, übergeordneten Anlage zur Be- und/oder Verarbeitung von Teig (nicht gezeigt), zu steuern. Die Steuereinrichtung 14 kann z. B. zur, insbesondere kontinuierlichen, Steuerung der Bewegungen des bewegbar gelagerten Wandungselements 7b in Abhängigkeit einer die Zuführung von Teigmasse 2 in die Teigaufnahmekammer 6 unmittelbar oder mittelbar beschreibenden Zuführinformation und/oder in Abhängigkeit einer den Austrag einzelner Teigportionen 3 aus der Portioniereinrichtung 5 unmittelbar oder mittelbar beschreibenden Austragsinformation eingerichtet sein. Die Zuführ- bzw. Austragsinformation kann z. B. auf Grundlage erfasster Betriebsparameter entsprechender Zuführ- bzw. Austrageinrichtungen erzeugt werden.

In dem in den Fig. 1, 2 gezeigten Ausführungsbeispiel sind weiterhin optionale Trennmittelaufbringeinrichtungen 16 gezeigt. Die Trennmittelaufbringeinrichtungen 16 sind zur zumindest abschnittsweisen Aufbringung eines Trennmittels auf wenigstens ein Wandungselement 7a, 7b, d. h. in dem in den Fig. 1, 2 gezeigten Ausführungsbeispiel, auf die als Förderbänder ausgebildeten Wandungselemente 7b, eingerichtet. Die Trennmittelaufbringeinrichtungen 16 sind beispielhaft außerhalb der Teigaufnahmekammer 6 angeordnet und mit den jeweiligen Wandungselementen 7b gekoppelt. Die Aufbringung des Trennmittels erfolgt in einem sich außerhalb des Teigaufnahmevolumens 8 erstreckenden Abschnitt des jeweiligen Wandungselements 7b. Bei dem Trennmittel kann es sich z. B. um Mehl, Öl oder Wachs handeln bzw. kann das Trennmittel Mehl, Öl oder Wachs umfassen.

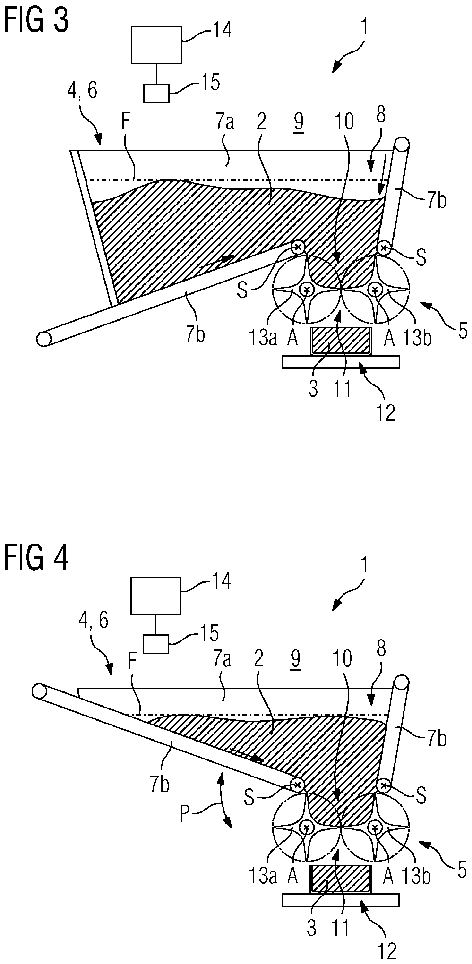

Die Fig. 3, 4 zeigen eine Prinzipdarstellung einer Vorrichtung 1 gemäß einem weiteren Ausführungsbeispiel in einer quergeschnittenen Ansicht.

Im Unterschied zu dem in den Fig. 1, 2 gezeigten Ausführungsbeispiel sind hier zwei (schwenk)bewegbar gelagerte Wandungselemente 7b vorhanden. Die Schwenkachsen S der jeweiligen Wandungselemente 7b sind parallel angeordnet bzw. ausgerichtet. Die bewegbar gelagerten Wandungselemente 7b sind einander gegenüber liegend angeordnet. Konkret handelt es sich bei den bewegbar gelagerten Wandungselementen 7b um zwei einander gegenüber liegend angeordnete Seitenwandungen der Teigaufnahmekammer 6. Die bewegbar gelagerten Wandungselementen 7b sind wiederum als bandartige Förderelemente bzw. als Förderbänder ausgebildet.

Wie sich aus einem Vergleich der Fig. 3, 4, in welchen das linke Wandungselement 7b in unterschiedlichen Schwenkstellungen dargestellt ist, ergibt, können die Wandungselemente 7b grundsätzlich unabhängig voneinander bewegt werden.

Im Übrigen gelten die Ausführungen im Zusammenhang mit dem in den Fig. 1, 2 gezeigten Ausführungsbeispiel analog für das in den Fig. 3, 4 gezeigte Ausführungsbeispiel.

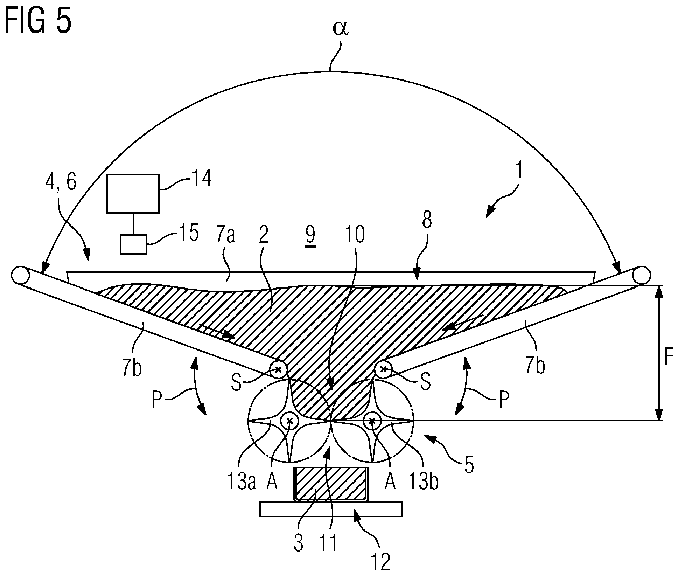

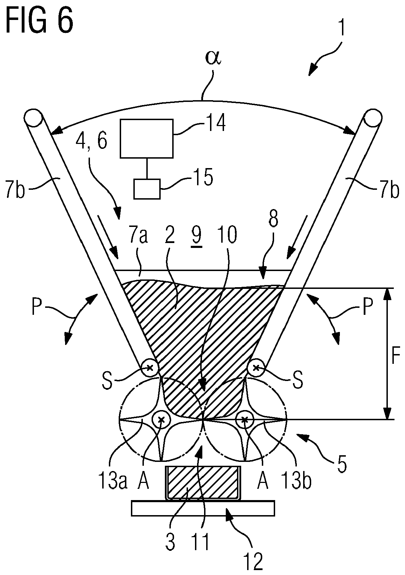

Die Fig. 5, 6 zeigen eine Prinzipdarstellung einer Vorrichtung 1 gemäß einem weiteren Ausführungsbeispiel in einer quergeschnittenen Ansicht.

Auch bei dem in den Fig. 5, 6 gezeigten Ausführungsbeispiel sind zwei einander gegenüber liegend angeordnete, jeweils (schwenk)bewegbar gelagerte Wandungselemente 7b vorhanden. Die bewegbar gelagerten Wandungselementen 7b sind wiederum als bandartige Förderelemente bzw. als Förderbänder ausgebildet.
Anhand der Fig. 5, 6 ist ersichtlich, dass durch Schwenkbewegungen der bewegbar gelagerten Wandungselemente 7b eine querschnittlich betrachtet trichterartige bzw. -förmige Teigaufnahmekammer 6 mit einem in Abhängigkeit der jeweiligen Schwenkstellung der Wandungselemente 7b variierbaren Öffnungswinkel α ausbildbar ist. Das Teigaufnahmevolumen 8 und das Füllstandsniveau F der in der Teigaufnahmekammer 6 aufgenommenen Teigmasse 2 lassen sich über Variationen des Öffnungswinkels α gezielt variieren bzw. steuern.

Für alle Ausführungsbeispiele gilt, dass zwischen einem bewegbar gelagerten Wandungselement 7a, 7b und einem, insbesondere an dieses angrenzenden, nicht bewegbar gelagerten Wandungselement 7a, 7b ein Dichtelement (nicht gezeigt), z. B. in Gestalt einer Dichtlippe oder dergleichen, angeordnet oder ausgebildet sein kann. Das Dichtelement ist zur Abdichtung der Teigaufnahmekammer 6 bzw. des Teigaufnahmevolumens 8 im Bereich zwischen dem bewegbar gelagerten Wandungselement 7a, 7b und dem, insbesondere an dieses angrenzenden, nicht bewegbar gelagerten Wandungselement 7a, 7b eingerichtet. Ein entsprechendes Dichtelement kann an dem bewegbar gelagerten Wandungselement 7a, 7b und/oder an dem nicht bewegbar gelagerten Wandungselement 7a, 7b angeordnet oder ausgebildet und (beschädigungs- bzw. zerstörungsfrei) lösbar an dem jeweiligen Wandungselement 7a, 7b befestigt sein.

Wenngleich in den in den Fig. gezeigten Ausführungsbeispielen nicht gezeigt, könnten jeweilige bewegbar gelagerte Wandungselemente 7a, 7b alternativ oder ergänzend in wenigstens einem translatorischen, insbesondere linearen, Bewegungsfreiheitsgrad translatorisch, insbesondere linear, bewegbar gelagert sein. Bei einer Bewegung eines Wandungselements 7a, 7b könnte es sich sonach um eine, insbesondere lineare, Translationsbewegung entlang einer, insbesondere linearen, z. B. horizontal ausgerichteten, Translationsachse handeln. Über eine derartige Bewegung wären das Teigaufnahmevolumen 8 der Teigaufnahmekammer 6 und das Füllstandsniveau der in der Teigaufnahmekammer 6 aufgenommenen Teigmasse 2 gleichermaßen variierbar bzw. steuerbar.

Selbstverständlich sind auch kombinierte Bewegungen eines Wandungselements 7a, 7b in unterschiedlichen Bewegungsfreiheitsgraden denkbar. Ein Wandungselement 7a, 7b könnte also in einem ersten Bewegungsfreiheitsgrad z. B. entlang einer Translationsachse und in einem zweiten Bewegungsfreiheitsgrad z. B. um eine Schwenkachse bewegt werden. Kombinierte Bewegungen eines Wandungselements 7a, 7b in unterschiedlichen Bewegungsfreiheitsgraden können grundsätzlich zeitgleich oder zeitlich versetzt erfolgen.

## Patentansprüche

1. Vorrichtung (1) zum, insbesondere kontinuierlichen, gravimetrischen Dosieren und Portionieren einzelner Teigportionen (3) aus einer Teigmasse (2), umfassend:
- eine Teigaufnahmeeinrichtung (4), welche zur Aufnahme einer in einzelne Teigportionen (3) zu portionierenden Teigmasse (2) eingerichtet ist, wobei die Teigaufnahmeeinrichtung (4) eine Teigaufnahmekammer (6) mit einem durch mehrere Wandungselemente (7a, 7b) definierten Teigaufnahmevolumen (8) aufweist,
- eine Portioniereinrichtung (5), welche zur, insbesondere kontinuierlichen, Portionierung einzelner Teigportionen (3) aus einer in der Teigaufnahmekammer (6) aufgenommenen Teigmasse (2) eingerichtet ist, wobei wenigstens ein Wandungselement (7b) der Teigaufnahmekammer (6), insbesondere relativ zu wenigstens einem weiteren Wandungselement (7a) der Teigaufnahmekammer (6), in wenigstens einem Bewegungsfreiheitsgrad bewegbar gelagert ist, wobei das Teigaufnahmevolumen (8) durch Bewegungen des wenigstens einen in wenigstens einem Bewegungsfreiheitsgrad bewegbar gelagerten Wandungselements (7b) variierbar ist,
**gekennzeichnet durch** eine Steuereinrichtung (14), welche zur, insbesondere kontinuierlichen, Steuerung der Bewegungen des wenigstens einen in wenigstens einem Bewegungsfreiheitsgrad bewegbar gelagerten Wandungselements (7b) in Abhängigkeit wenigstens einer vorgebbaren oder vorgegebenen Zielgröße eingerichtet ist; wobei die Zielgröße ein konstantes Füllstandsniveau (F) der in der Teigaufnahmekammer (6) aufgenommenen Teigmasse (2) ist.

2. Vorrichtung nach Anspruch 1, **gekennzeichnet durch** eine Steuereinrichtung (14), welche zur, insbesondere kontinuierlichen, Steuerung der Bewegungen des wenigstens einen in wenigstens einem Bewegungsfreiheitsgrad bewegbar gelagerten Wandungselements (7b) in Abhängigkeit einer die Zuführung von Teigmasse (2) in die Teigaufnahmekammer (6) beschreibenden Zuführinformation und/oder in Abhängigkeit einer den Austrag einzelner Teigportionen (3) aus der Portioniereinrichtung (5) beschreibenden Austragsinformation eingerichtet ist.

3. Vorrichtung nach einem der vorhergehenden Ansprüche, **dadurch gekennzeichnet, dass** das wenigstens eine bewegbar gelagerte Wandungselement (7b) in wenigstens einem translatorischen, insbesondere linearen, Bewegungsfreiheitsgrad translatorisch, insbesondere linear, bewegbar gelagert ist und/oder das wenigstens eine bewegbar gelagerte Wandungselement (7b) in wenigstens einem Schwenkbewegungsfreiheitsgrad schwenkbewegbar gelagert ist.

4. Vorrichtung nach einem der vorhergehenden Ansprüche, **dadurch gekennzeichnet, dass** mehrere, insbesondere einander gegenüber liegend angeordnete, Wandungselemente (7b) jeweils in wenigstens einem Bewegungsfreiheitsgrad bewegbar gelagert sind.

5. Vorrichtung nach Anspruch 4, **gekennzeichnet durch** zwei einander gegenüber liegend angeordnete, jeweils in wenigstens einem Schwenkbewegungsfreiheitsgrad schwenkbewegbar gelagerte Wandungselemente (7b), wobei durch jeweilige Schwenkbewegungen der Wandungselemente (7b) eine, insbesondere querschnittlich betrachtet, trichterartige Teigaufnahmekammer (6) mit einem in Abhängigkeit der jeweiligen Schwenkstellung der Wandungselemente (7b) variierbaren Öffnungswinkel (α) ausbildbar ist.

6. Vorrichtung nach einem der vorhergehenden Ansprüche, **dadurch gekennzeichnet, dass** das oder wenigstens ein in wenigstens einem Bewegungsfreiheitsgrad bewegbar gelagertes Wandungselement (7b) als bandartiges Förderelement ausgebildet ist oder ein solches umfasst.

7. Vorrichtung nach einem der vorhergehenden Ansprüche, **dadurch gekennzeichnet, dass** die Portioniereinrichtung (5) als Walzenportionierer ausgebildet ist oder wenigstens einen solchen umfasst, welcher wenigstens ein als, insbesondere sternartig bzw. -förmig ausgebildetes Walzenelement, ausgebildetes oder ein solches umfassendes Portionierelement (13a, 13b) umfasst.

8. Vorrichtung nach einem der vorhergehenden Ansprüche, **dadurch gekennzeichnet, dass** zwischen einem in wenigstens einem Bewegungsfreiheitsgrad bewegbar gelagerten Wandungselement (7b) und einem, insbesondere an dieses angrenzenden, nicht bewegbar gelagerten Wandungselement (7a) wenigstens ein Dichtelement angeordnet oder ausgebildet ist, welches zur Abdichtung des Teigaufnahmevolumens (8) im Bereich zwischen dem in wenigstens einem Bewegungsfreiheitsgrad bewegbar gelagerten Wandungselement (7b) und dem, insbesondere an dieses angrenzenden, nicht bewegbar gelagerten Wandungselement (7a) eingerichtet ist.

9. Vorrichtung nach einem der vorhergehenden Ansprüche, **gekennzeichnet durch** wenigstens eine Trennmittelaufbringeinrichtung (16), welche zur zumindest abschnittsweisen Aufbringung wenigstens eines Trennmittels auf wenigstens ein Wandungselement (7a, 7b), insbesondere auf wenigstens ein in wenigstens einem Bewegungsfreiheitsgrad bewegbar gelagertes Wandungselement (7b), eingerichtet ist.

## Claims

1. Device (1) for, in particular continuous, gravimetric dosing and portioning of individual dough portions (3) from a dough mass (2), comprising:
- a dough receiving device (4) which is configured to receive a dough mass (2) to be portioned into individual dough portions (3), the dough receiving device (4) comprising a dough receiving chamber (6) with a dough receiving volume (8) defined by a plurality of wall elements (7a, 7b),
- a portioning device (5) which is configured for, in particular continuous, portioning of individual dough portions (3) from a dough mass (2) received in the dough receiving chamber (6), at least one wall element (7b) of the dough receiving chamber (6), in particular relative to at least one further wall element (7a) of the dough receiving chamber (6), being mounted movably in at least one degree of freedom of movement, the dough receiving volume (8) being variable by movements of the at least one wall element (7b) mounted movably in at least one degree of freedom of movement.
**characterized by** a control device (14) which is configured for, in particular continuous, control of the movements of the at least one wall element (7b) mounted movably in at least one degree of freedom of movement as a function of at least one predeterminable or predetermined target variable, wherein the target variable is a constant filling level (F) of the dough mass (2) received in the dough receiving chamber (6).

2. Device according to claim 1, **characterized by** a control device (14) which is configured for, in particular continuous, control of the movements of the at least one wall element (7b) mounted movably in at least one degree of freedom of movement as a function of feed information describing the feed of dough mass (2) into the dough receiving chamber (6) and/or as a function of discharge information describing the discharge of individual dough portions (3) from the portioning device (5).

3. Device according to one of the preceding claims, **characterized in that** the at least one movably mounted wall element (7b) is mounted in at least one translatory, in particular linear, degree of freedom of movement in a translatory, in particular linear, movable manner and/or the at least one movably mounted wall element (7b) is mounted in a pivotable manner in at least one degree of freedom of pivoting movement.

4. Device according to one of the preceding claims, **characterized in that** a plurality of wall elements (7b), in particular wall elements arranged opposite one another, are each mounted movably in at least one degree of freedom of movement.

5. Device according to claim 4, **characterized by** two wall elements (7b) which are arranged opposite one another and can each be mounted pivotably in at least one degree of freedom of pivoting movement, wherein it is possible, by means of respective pivoting movements of the wall elements (7b), to form a funnel-like dough-receiving chamber (6), in particular viewed cross-sectionally, with an opening angle (α) which can be varied as a function of the respective pivoting position of the wall elements (7b).

6. Device according to one of the preceding claims, **characterized in that** the or at least one wall element (7b) mounted movably in at least one degree of freedom of movement is designed as a belt-like conveyor element or comprises such a conveyor element.

7. Device according to one of the preceding claims, **characterized in that** the portioning device (5) is designed as a roller portioner or comprises at least such a roller portioner, which comprises at least one portioning element (13a, 13b) designed as a roller element, designed in particular star-like or star-shaped, or a portioning element (13a, 13b) comprising such a roller element.

8. Device according to one of the preceding claims, **characterized in that** at least one sealing element is arranged or formed between a wall element (7b) mounted movably in at least one degree of freedom of movement and a wall element (7a) mounted non-movably, in particular adjacent thereto, which sealing element is configured to seal the dough receiving volume (8) in the region between the wall element (7b) mounted movably in at least one degree of freedom of movement and the wall element (7a) mounted non-movably, in particular adjacent thereto.

9. Device according to one of the preceding claims, **characterized by** at least one separating agent application device (16) which is configured for applying at least one separating agent at least in sections to at least one wall element (7a, 7b), in particular to at least one wall element (7b) mounted movably in at least one degree of freedom of movement.

## Revendications

1. Dispositif (1) destiné à assurer, notamment de manière continue, un dosage gravimétrique et un fractionnement d'une masse de pâte (2) en portions de pâte individuelles (3), comprenant :
- un dispositif d'accueil de pâte (4), qui est conçu pour accueillir une masse de pâte (2) devant être fractionnée en portions de pâte individuelles (3), le dispositif d'accueil de pâte (4) présentant une chambre d'accueil de pâte (6) avec un volume d'accueil de pâte (8) défini par plusieurs éléments de paroi (7a, 7b),
- un dispositif de fractionnement en portions (5), qui est conçu pour assurer, notamment de manière continue, le fractionnement d'une masse de pâte (2) reçue dans la chambre d'accueil de pâte (6), en portions de pâte individuelles (3),
dispositif dans lequel au moins un élément de paroi (7b) de la chambre d'accueil de pâte (6) est monté notamment de manière déplaçable selon au moins un degré de liberté de mouvement, par rapport à au moins un autre élément de paroi (7a) de la chambre d'accueil de pâte (6), et
dans lequel il est possible de faire varier le volume d'accueil de pâte (8), par des déplacements dudit au moins un élément de paroi (7b) monté déplaçable selon au moins un degré de liberté de mouvement,
**caractérisé par** un dispositif de commande (14), qui est conçu pour assurer, notamment de manière continue, la commande des mouvements de déplacement dudit au moins un élément de paroi (7b) monté déplaçable selon au moins un degré de liberté de mouvement, en fonction d'au moins une grandeur cible pouvant être prédéterminée ou prescrite, la grandeur cible étant un niveau de remplissage (F) constant de la masse de pâte (2) reçue dans la chambre d'accueil de pâte (6).

2. Dispositif selon la revendication 1, **caractérisé par** un dispositif de commande (14), qui est conçu pour assurer, notamment de manière continue, la commande des mouvements de déplacement dudit au moins un élément de paroi (7b) monté déplaçable selon au moins un degré de liberté de mouvement, en fonction d'une information d'alimentation décrivant l'amenée de masse de pâte (2) dans la chambre d'accueil de pâte (6), et/ou en fonction d'une information d'évacuation décrivant l'évacuation de portions de pâte individuelles (3) du dispositif de fractionnement en portions (5).

3. Dispositif selon l'une des revendications précédentes, **caractérisé en ce que** ledit au moins un élément de paroi (7b) monté de manière déplaçable, est monté de manière à pouvoir être déplacé en translation, notamment linéairement, selon au moins un degré de liberté de mouvement de translation, notamment linéaire, et/ou ledit au moins un élément de paroi (7b) monté de manière déplaçable, est monté de manière à pouvoir être déplacé par pivotement selon au moins un degré de liberté de mouvement de pivotement.

4. Dispositif selon l'une des revendications précédentes, **caractérisé en ce que** plusieurs éléments de paroi (7b), notamment agencés de manière mutuellement opposée, sont montés chacun de manière à pouvoir être déplacés selon au moins un degré de liberté de mouvement.

5. Dispositif selon la revendication 4, **caractérisé par** deux éléments de paroi (7b) agencés de manière mutuellement opposée et montés chacun de manière à pouvoir être déplacé par pivotement selon au moins un degré de liberté de mouvement de pivotement, les mouvements de pivotement respectifs des éléments de paroi (7b) permettant, notamment vu en section transversale, de former une chambre d'accueil de pâte (6) en forme de trémie, avec un angle d'ouverture (α) variable en fonction de la position de pivotement respective des éléments de paroi (7b).

6. Dispositif selon l'une des revendications précédentes, **caractérisé en ce que** l'élément de paroi (7b) ou au moins un élément de paroi monté déplaçable selon au moins un degré de liberté de mouvement, est réalisé en tant qu'élément de transport sous forme de bande, ou comprend un tel élément de transport.

7. Dispositif selon l'une des revendications précédentes, **caractérisé en ce que** le dispositif de fractionnement en portions (5) est réalisé sous forme de système de fractionnement en portions à rouleaux, ou comporte au moins un tel système, qui comporte au moins un élément de fractionnement en portions (13a, 13b) réalisé notamment à la manière d'une étoile ou en forme d'étoile, ou comprenant un tel élément.

8. Dispositif selon l'une des revendications précédentes, **caractérisé en ce qu'**entre un élément de paroi (7b) monté déplaçable selon au moins un degré de liberté de mouvement et un élément paroi (7a), notamment adjacent au précédent et monté non déplaçable, est agencé ou formé un élément d'étanchéité, qui est conçu pour assurer une étanchéité du volume d'accueil de pâte (8) dans la zone entre l'élément de paroi (7b) monté déplaçable selon au moins un degré de liberté de mouvement et l'élément de paroi (7a) monté non déplaçable.

9. Dispositif selon l'une des revendications précédentes, **caractérisé par** un système d'application d'agent séparateur (16), qui est conçu pour appliquer, au moins par secteurs, au moins un agent séparateur sur au moins un élément de paroi (7a, 7b), notamment sur au moins un élément de paroi (7b) monté déplaçable selon au moins un degré de liberté de mouvement.
